(19) Europäisches Patentamt
European Patent Office
Office européen des brevets

(11) **EP 3 055 235 B1**

(12) **EUROPÄISCHE PATENTSCHRIFT**

(45) Veröffentlichungstag und Bekanntmachung des Hinweises auf die Patenterteilung:
**26.08.2020   Patentblatt 2020/35**

(21) Anmeldenummer: **14805773.0**

(22) Anmeldetag: **10.10.2014**

(51) Int Cl.:
**B65G 43/10** *(2006.01)*    **B65G 13/11** *(2006.01)*

(86) Internationale Anmeldenummer:
**PCT/AT2014/050240**

(87) Internationale Veröffentlichungsnummer:
**WO 2015/051390 (16.04.2015 Gazette 2015/15)**

(54) **FÖRDERANLAGE MIT IM WESENTLICHEN SYMMETRISCHEN LÄNGS VERLAUFENDEN STROMLEITERN**

CONVEYOR SYSTEM HAVING SUBSTANTIALLY SYMMETRICAL LONGITUDINALLY RUNNING ELECTRIC CONDUCTORS

SYSTÈME DE TRANSPORT ÉQUIPÉ DE CONDUCTEURS DE COURANT SENSIBLEMENT SYMÉTRIQUES S'ÉTENDANT LONGITUDINALEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.10.2013   AT 506542013**

(43) Veröffentlichungstag der Anmeldung:
**17.08.2016   Patentblatt 2016/33**

(60) Teilanmeldung:
**20186641.5**

(73) Patentinhaber: **TGW Mechanics GmbH
4600 Wels (AT)**

(72) Erfinder: **REISCHL, Josef
A-4623 Gunskirchen (AT)**

(74) Vertreter: **Burger, Hannes
Anwälte Burger & Partner
Rechtsanwalt GmbH
Rosenauerweg 16
4580 Windischgarsten (AT)**

(56) Entgegenhaltungen:
WO-A1-2007/036421    WO-A1-2012/094690
DE-U1-202004 020 677    FR-A1- 2 810 747
GB-A- 2 435 124    JP-A- H10 181 829
JP-A- 2000 247 423    JP-A- 2003 051 362

## Beschreibung

Die Erfindung betrifft eine Förderanlage, umfassend zwei voneinander beabstandet verlaufende Rahmenprofile, mehrere dazwischen angeordnete, motorisierte Förderrollen, einen längs des zumindest einen Rahmenprofils verlaufenden Isolator, mehrere in dem Isolator angeordnete Stromleiter, welche mit einer Antriebselektronik der Förderrollen elektrisch verbunden sind, und eine Anschlussbox, die getrennt von der Förderrolle angeordnet ist, wobei der Formfaktor f eines Stromleiters, welcher als Quotient des Umfangs eines zum Querschnitt des Stromleiters flächenäquivalenten Kreises und des Umfangs des genannten Querschnitts des Stromleiters definiert ist, im Bereich von f= 0,88 bis zu f=1,00 liegt.

Eine solche Förderanlage ist grundsätzlich bekannt. Dabei bilden die Stromleiter einen Energieversorgungs- und/oder Datenbus, der kontaktiert werden kann, um elektrische Energie und/oder Datensignale zwischen einer Stromversorgung beziehungsweise einer Steuerung für die Motorrollen abzugreifen.

Aus der WO 2012/094690 A1 ist eine Förderanlage zum Transport von Objekten nach dem Oberbegriff des Anspruchs 1 bekannt, welche zwei voneinander beabstandet verlaufende Rahmenprofile, mehrere dazwischen angeordnete, motorisierte Förderrollen, einen längs des zumindest einen Rahmenprofils verlaufenden Isolator mit mehreren darin eingebetteten Stromleitern und je eine Anschlussbox für je eine motorisierte Förderrolle umfasst. Die Anschlussbox ist direkt am Rahmenprofil unterhalb der Förderrolle montiert und ist mit der Antriebselektronik für die Förderrolle ausgestattet. Die Stromleiter sind mit einem kreisrunden Querschnitt gestaltet. Die Kontaktierung der Stromleiter erfolgt über Schneidklemmkontakte/Piercing-Kontakte, welche das Isolationsmaterial durchdringen.

Die DE 20 2004 020 677 U1 offenbart eine Förderanlage zum Transport von Objekten, bei dem in einem der Rahmenprofile ein Kabelkanal ausgebildet ist. Dabei kann auf einer Außenseite des Rahmenprofiles eine Halterung mit einer Vielzahl übereinander angeordneter Aufnahmen für Kabel angeordnet werden.

Die EP 0 300 128 A1 offenbart eine Rollenförderbahn, bei der in seitlichen Wangen derselben rechteckige Leiterschienen hochkant eingebettet sind. An bestimmten Stellen sind die genannten Leiterschienen an die Oberfläche der seitlichen Wangen geführt. Dort können die Motorrollen über elektrische Kontakte, welche die Leiterschienen berühren, mit elektrischer Energie versorgt werden.

Nachteilig an dieser Anordnung ist, dass die Motorrollen nur an bestimmten Positionen, nämlich dort wo die Leiterschienen an die Oberfläche der seitlichen Wangen geführt sind, montiert werden können.

Des Weiteren ist nachteilig, dass kurvenförmige Verläufe der Förderbahn, Anstiege derselben, sowie helixförmige Verläufe (ansteigende, kurvenförmige Verläufe) der Förderbahn mit dem in der EP 0 300 128 A1 verwendeten System nur schwer realisiert werden können.

Eine Aufgabe der Erfindung ist es daher, eine verbesserte Förderanlage anzugeben. Insbesondere sollen auch komplexere Verläufe der Förderbahn leicht realisierbar und die Motorrollen flexibel einsetzbar sein.

Die Aufgabe der Erfindung wird mit einer Förderanlage gemäß Anspruch 1 gelöst.

Die Förderbahn kann mit komplexen Verläufen realisiert werden. Insbesondere sind kurvenförmige Verläufe, Anstiege und helixförmige Verläufe leicht realisierbar, da die Stromleiter in allen Richtungen im Wesentlichen dasselbe Biegeverhalten aufweisen. Insbesondere ist das Widerstandsmoment in x-Richtung und y-Richtung gleich oder annähernd gleich. Darüber hinaus sind die Motorrollen flexibel einsetzbar, da die Stromleiter praktisch in deren gesamten Verlauf kontaktiert werden können. Sinnvoll ist es in diesem Zusammenhang auch, den Isolator aus einem leicht biegbaren Material herzustellen. Insbesondere ist es von Vorteil, wenn der Isolator aus PVC-U hergestellt ist und/oder aus einem Material mit einem Elastizitätsmodul von rund 2900 N/mm$^2$ besteht.

Die elektrische Verbindung zur Antriebselektronik der Förderrollen erfolgt mit Hilfe von federnden und einseitig auf den Stromleitern aufliegenden Kontakten. Dadurch können einfach aufgebaute Kontakte für die elektrische Kontaktierung der Antriebselektronik verwendet werden. Insbesondere können diese Kontakte in einer speziellen, von der Förderrolle getrennten Anschlussbox angeordnet sein. Die Anschlussbox kann auch die genannte Antriebselektronik enthalten. Letztere kann aber auch direkt in der Förderrolle angeordnet sein.

Die elektrische Verbindung von mehreren Abschnitten von Stromleitern erfolgt mit Hilfe von federnden, die Stromleiter umgreifenden Kontakten. Auf diese Weise kann der Übergangswiderstand klein gehalten werden, und es können vergleichsweise große Ströme über die genannten Kontakte geleitet werden.

Weitere vorteilhafte Ausgestaltungen und Weiterbildungen der Erfindung ergeben sich aus den Unteransprüchen sowie aus der Beschreibung in Zusammenschau mit den Figuren.

Günstig ist es, wenn der Querschnitt eines Stromleiters polygonförmig ist, insbesondere regelmäßig polygonförmig. Im speziellen kann der Querschnitt eines Stromleiters somit rechteckig aber auch annähernd quadratisch, quadratisch, sechseckig oder achteckig sein.

Günstig ist es, wenn der Querschnitt eines Stromleiters oval ist, insbesondere kreisförmig. Im speziellen kann der Querschnitt eines Stromleiters somit oval aber auch annähernd kreisförmig oder kreisförmig sein.

Besonders vorteilhaft ist es, wenn je Stromleiter mehrere federnde und punktförmig, linienförmig oder flächig aufliegende Kontakte vorgesehen sind.

Vorteilhaft ist es weiterhin, wenn die elektrische Verbindung von mehreren Abschnitten von Stromleitern mit Hilfe von federnden, die Stromleiter umgreifenden Kontakten erfolgt. Auf diese Weise kann der Übergangswiderstand klein gehalten werden, und es können vergleichsweise große Ströme über die genannten Kontakte geleitet werden.

Durch die Verwendung mehrerer in Längsrichtung der Stromleiter hintereinander liegender Kontakte gelingt die Kontaktierung auch dann noch, wenn in der Verlegung des Stromleiters Unebenheiten auftreten oder der Energieversorgungsbus bogenförmig verlegt wird, z.B. in einer Kurve der Förderbahn.

Besonders vorteilhaft ist es in diesem Zusammenhang, wenn die Kontakte jeweils mehrere quer zum Stromleiter verlaufende und in Längsrichtung desselben voneinander beabstandete Kontaktzungen aufweisen. Dadurch kann der Stromübergangswiderstand verringert werden, da die Kontaktzungen Unebenheiten gut ausgleichen können und elektrisch wie einzelne, parallel geschaltete Kontakte wirken.

Von Vorteil ist auch, wenn der längs des Rahmenprofils verlaufende Isolator mit den mehreren längsseitig offenen Aufnahmen und den Stromleitern einen Energieversorgungsbus bildet, und dass die Anschlussbox eine Grundplatte und einen Aufsteckteil aufweist, wobei vorerst die Grundplatte am Rahmenprofil oder im Rahmenprofil befestigt wird und danach der Energieversorgungsbus montiert und durch Aufstecken des Aufsteckteils kontaktiert wird.

Zum besseren Verständnis der Erfindung wird diese anhand der nachfolgenden Figuren näher erläutert.

Es zeigen jeweils:

Fig. 1    einen beispielhaften Ausschnitt aus einer Förderanlage 1 von schräg oben;
Fig. 2    wie Fig. 1, nur von schräg hinten;
Fig. 3    wie Fig. 1, nur von schräg unten;
Fig. 4    ein Rahmenprofil mit einem darauf angeordneten Energieversorgungsbus, einer Anschlussbox für eine Förderrolle sowie mit einem Verbindungskabel zum Verbinden verschiedener Abschnitte des Energieversorgungsbusses;
Fig. 5    wie Fig. 4, nur in Explosionsdarstellung;
Fig. 6    wie Fig. 4, nur in Seitenansicht;
Fig. 7    einen Schnitt durch das Verbindungskabel beziehungsweise eine Frontansicht der in Fig. 4 dargestellten Anordnung;
Fig. 8    einen Schnitt durch die in Fig. 4 dargestellten Anordnung in Höhe der Anschlussbox;
Fig. 9    den Energieversorgungsbus mit dem Verbindungskabel schräg von hinten isoliert dargestellt;
Fig. 10   wie Fig. 9, nur im Querschnitt;
Fig. 11   den Energieversorgungsbus mit einer Anschlussbox schräg von hinten isoliert dargestellt;
Fig. 12   eine Anschlussbox im Schnitt;
Fig. 13   die Anschlussbox aus Fig. 12 in Vorderansicht;
Fig. 14   einen Ausschnitt aus einer Förderanlage mit einem Datenbus und einer Verkabelung zu einem Photodetektor und
Fig. 15   wie Fig. 14, nur teilweise in Explosionsdarstellung.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

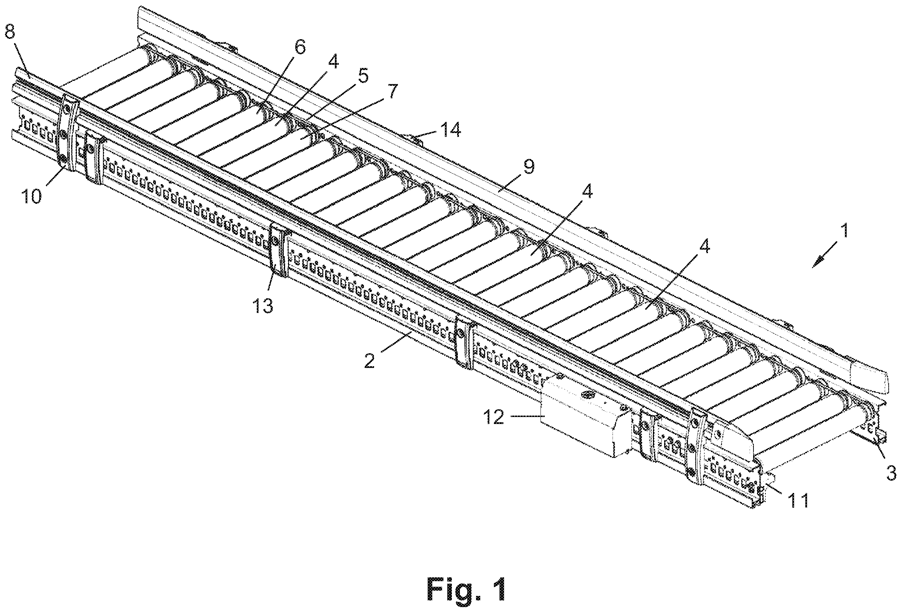

Fig. 1 zeigt einen beispielhaften Ausschnitt aus einer Förderanlage 1 von schräg von oben. Die Förderanlage zum Transport von Objekten (z.B. Behälter, Tablare, Kartonagen) umfasst zwei voneinander beabstandet verlaufende Rahmenprofile 2 und 3 sowie mehrere dazwischen angeordnete, motorisierte Förderrollen 4. Über Riemen 5 können weitere nicht motorisierte Förderrollen 6 und 7 mit angetrieben werden. Selbstverständlich ist es keine zwingende Bedingung, dass alle Förderrollen der Förderanlage 1 direkt oder indirekt angetrieben sind, sondern es können auch leerlaufende Rollen zwischen den Rahmenprofilen 2 und 3 angeordnet sein. Denkbar wäre auch, dass ein Förderband oder Gurt über die Förderrollen 4, 6, 7 gelegt wird. Insbesondere kann die motorisierte Förderrolle 4 dabei am Ende des Förderbands oder Gurts angeordnet sein, da der Umschlingungswinkel des Bands bzw. des Gurts dort groß ist. Die motorisierte Förderrolle 4 bildet demnach eine Antriebsrolle. Ein gesonderter Riemen 5 kann bei Verwendung eines Bands oder Gurts entfallen. Demnach wird eine Förderfläche für Objekte nicht durch die motorisierte Förderrolle 4 ausgebildet, sondern durch ein oberes Trum des Förderbands oder Gurts.

Weiterhin umfasst die Förderanlage 1 optionale Führungsschienen 8 und 9 welche über Montagebügel 10 an den Rahmenprofilen 2 und 3 befestigt sind. Diese dienen der besseren seitlichen Führung der auf der Förderanlage 1 beförderten Objekte, z.B. Behälter, Tablare und Kartonagen.

Die motorisierten Förderrollen 4 sind über Anschlussboxen 11 an einen Energieversorgungsbus und einen Datenbus angeschlossen. Die Steuerung der Förderrollen 4 erfolgt über die Steuerung 12. Zur Detektion von Förderobjekten können im Verlauf der Rahmenprofile 2 und 3 auch Photodetektoren 13 angeordnet sein. Gegenüberliegend sind in diesem Beispiel zusätzlich Reflektoren 14 angeordnet.

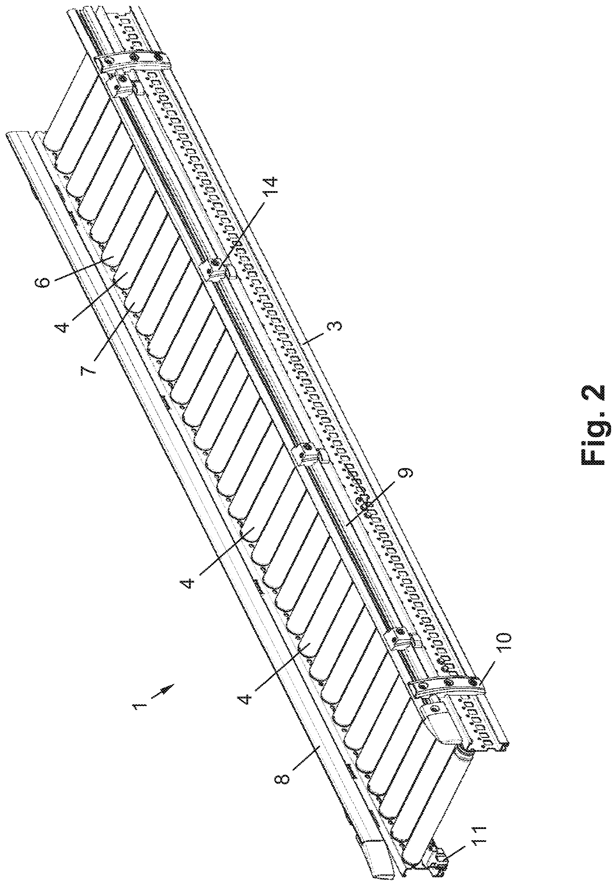

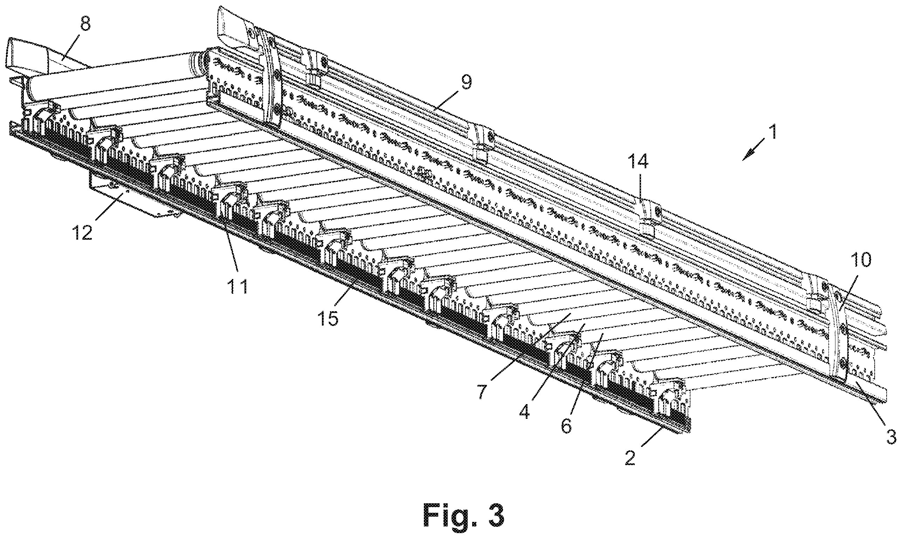

Die Fig. 2 zeigt die bereits in Fig. 1 dargestellte Förderanlage 1 nun von schräg hinten, die Fig. 3 von schräg unten. In der Fig. 3 ist daher zusätzlich auch der am Rahmenprofil 2 innenliegend verlegte Energieversorgungsbus 15 zu sehen.

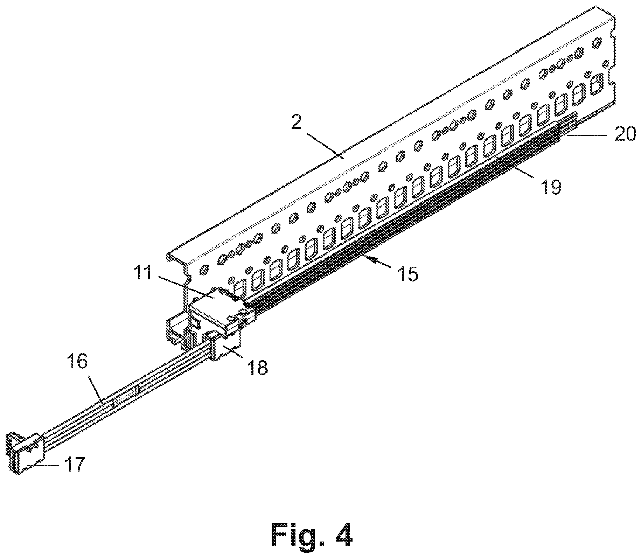

Die Fig. 4 zeigt nun ein Detail der Förderanlage 1, konkret das Rahmenprofil 2 mit dem darauf angeordneten Energieversorgungsbus 15, einer Anschlussbox 11 sowie einem Verbindungskabel 16, das verschiedene Abschnitte des Energieversorgungsbusses 15 miteinander verbindet. Dazu sind am Verbindungskabel 16 Stecker 17 und 18 angeordnet, welche in die Anschlussboxen 11 eingesteckt werden können. In der Fig. 4 ist zudem erkennbar, dass der Energieversorgungsbus 15 einen längs des Rahmenprofils 2 verlaufenden Isolator 19 mit mehreren längsseitig offenen Aufnahmen umfasst, in denen mehrere Stromleiter 20 angeordnet sind, wobei je ein Stromleiter 20 in je einer Aufnahme gelagert ist. Über die Anschlussboxen 11 sind die Stromleiter 20 mit einer Antriebselektronik der Förderrollen 4 elektrisch verbunden. Vorteilhaft ist je (motorisierter) Förderrolle 4 je eine Anschlussbox 11 vorgesehen, und jede Anschlussbox 11 ist an die Stromleiter 20 angeschlossen. Denkbar ist natürlich auch, dass eine Anschlussbox 11 für mehrere Förderrollen 4 vorgesehen ist.

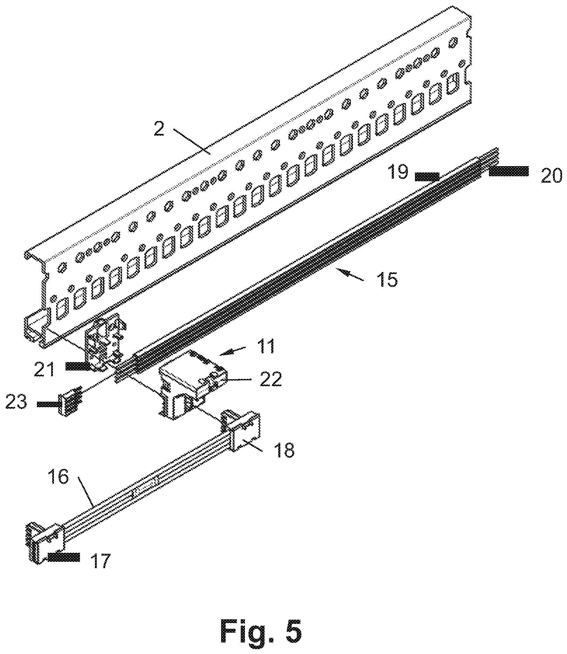

Fig. 5 zeigt den bereits in Fig. 4 dargestellten Ausschnitt der Förderanlage 1 nun in Explosionsdarstellung. In der Fig. 5 ist erkennbar, dass die Anschlussbox 11 eine Grundplatte 21 sowie einen Aufsteckteil 22 aufweist. Zusätzlich kann der Energieversorgungsbus 15 mit einer Endkappe 23 abgeschlossen werden.

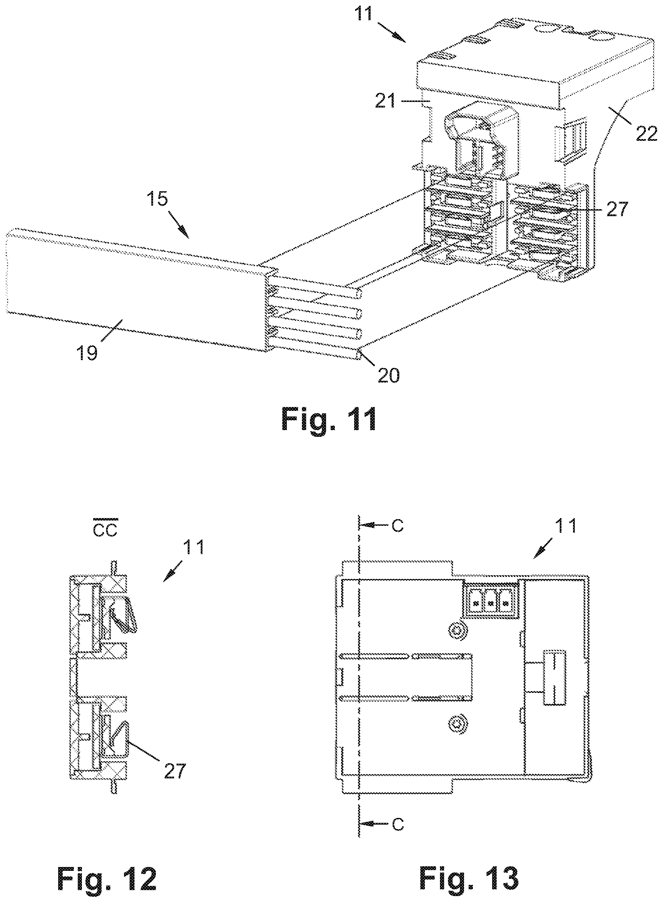

Beim Aufbau der Förderanlage 1 werden also zuerst die Grundplatten 21 am/im Rahmenprofil 2 befestigt (z.B. über eine Rastverbindung eingeclipst). Danach wird der Energieversorgungsbus 15 montiert und durch Aufstecken des Aufsteckteils 22 kontaktiert, insbesondere mit der Antriebselektronik für die Förderrolle 4 (siehe auch die Figuren 11 bis 13). Unterschiedliche Abschnitte des Energieversorgungsbusses 15 können schließlich durch Einstecken eines Verbindungskabels 16 miteinander verbunden werden.

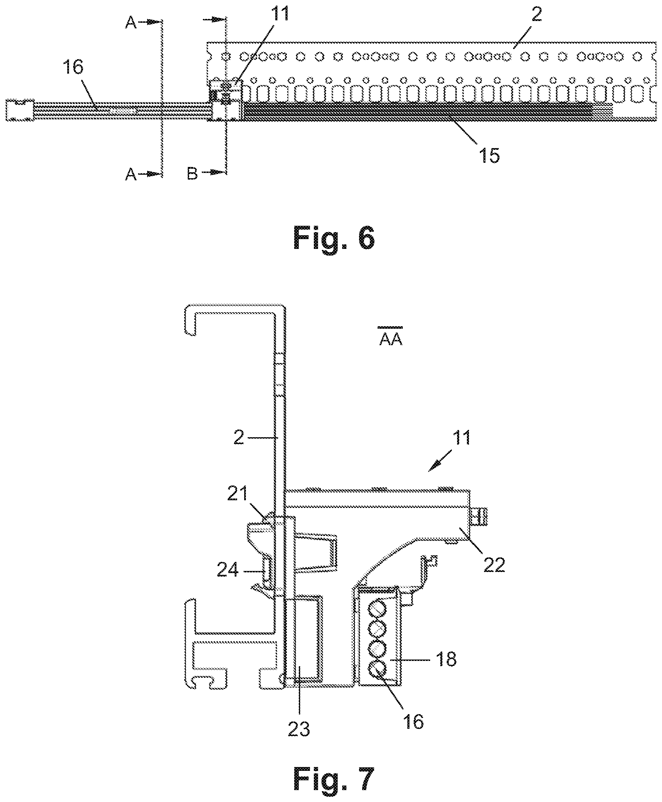

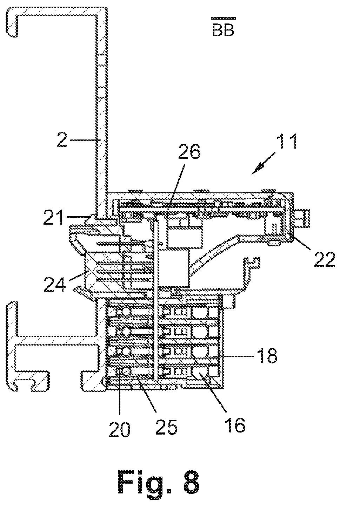

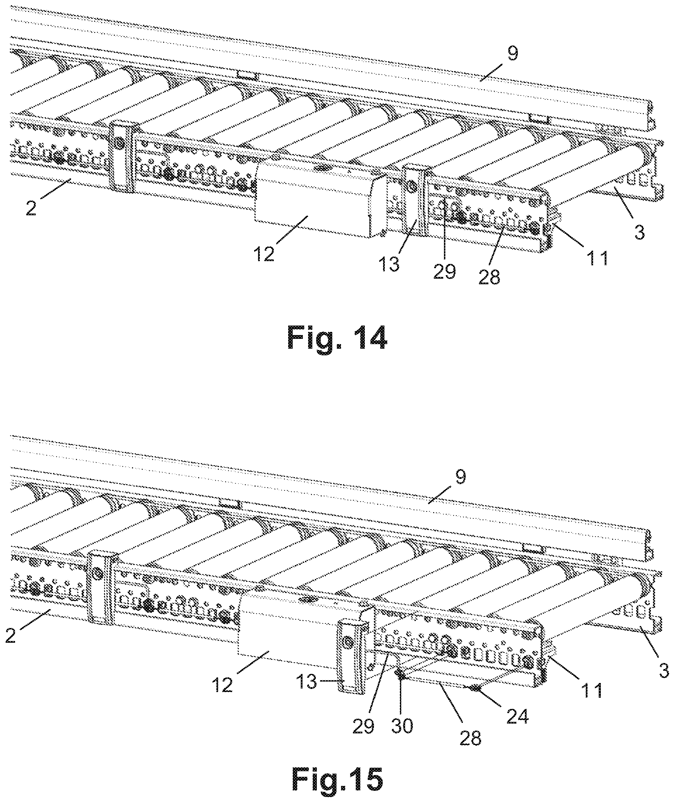

Die Fig. 6 zeigt die bereits in den Figuren 4 und 5 dargestellte Anordnung nun in Seitenansicht, die Fig. 7 zeigt einen Querschnitt AA und die Fig. 8 einen Querschnitt BB. In den Fig. 7 und 8 ist gut die durch das Rahmenprofil 2 hindurch ragende Grundplatte 21 sowie deren Rastverbindung im Rahmenprofil 2 zu sehen. Darüber hinaus ist auch ein Stecker 24 eines Datenbusses zu sehen, der am Rahmenprofil 2 außen und damit gegenüberliegend dem Energieversorgungsbus 15 angeordnet ist (siehe auch Fig. 14 und 15). In der Fig. 8 sind weiterhin auch Kontakte 25 des Steckers 18 zu sehen, welche federnd sind und die Stromleiter 20 umgreifen. Schließlich ist auch eine in der Anschlussbox 11 angeordnete Leiterplatte 26 mit einer darauf angeordneten elektronischen Schaltung dargestellt, welche unter anderem der Kommunikation mit der Steuerung 12 und der Antriebssteuerung der Förderrolle 4 dient. Die Stromleiter 20 sind in diesem Beispiel identisch aufgebaut. Prinzipiell ist aber auch die Verwendung von unterschiedlichen Stromleitern 20, insbesondere mit unterschiedlichem Querschnitt, denkbar.

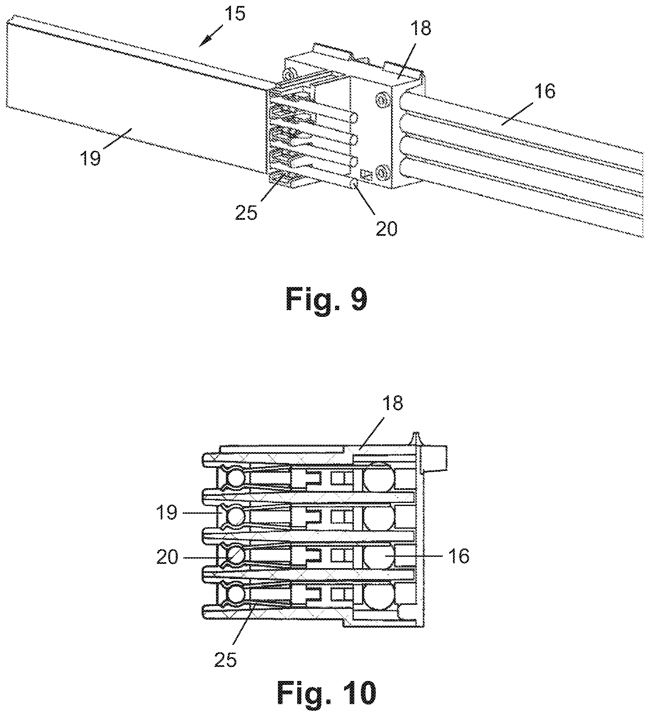

Fig. 9 zeigt nun den Energieversorgungsbus 15 mit dem Verbindungskabel 16 schräg von hinten isoliert dargestellt, die Fig. 10 dieselbe Anordnung im Schnitt. In den Figuren 9 und 10 ist insbesondere gut erkennbar, dass der Querschnitt der Stromleiter 20 kreisförmig ist. Dies ist aber keinesfalls eine zwingende Bedingung. Der Querschnitt könnte beispielsweise auch annähernd quadratisch, quadratisch, sechseckig oder achteckig sowie oval (z.B. ellipsenförmig) aber annähernd kreisförmig sein.

Generell liegt der Formfaktor f des Stromleiters 20, welcher als Quotient des Umfangs eines zum Querschnitt des Stromleiters 20 flächenäquivalenten Kreises und des Umfangs des genannten Querschnitts des Stromleiters 20 definiert ist, im Bereich von f= 0,88 bis zu f=1,00. Weist der Stromleiter 20 einen kreisförmigen Querschnitt auf, so beträgt der Formfaktor demgemäß f=1,00.

Weist der Stromleiter 20 zum Beispiel einen quadratischen Querschnitt mit 1 mm x 1 mm auf, so beträgt dessen Fläche A=1 mm$^2$ und dessen Umfang U=4 mm. Der Durchmesser des flächenäquivalenten Kreises beträgt

$$d = \sqrt{\frac{4 \cdot A}{\pi}} = \sqrt{\frac{4}{\pi}} = 1,13 \; mm$$

Dessen Umfang U beträgt

$$U = d \cdot \pi = 1,13 \cdot \pi = 3,54 \; mm$$

Der Formfaktor f ist somit

$$f = \frac{U_K}{U_L} = \frac{3,54}{4,00} = 0,89$$

Insbesondere aus der Fig. 9 ist auch erkennbar, dass die federnden Kontakte 25, welche die Stromleiter 20 umgreifen, jeweils mehrere Kontaktzungen aufweisen, die quer zum Stromleiter 20 verlaufen und in Längsrichtung des Stromleiters 20 voneinander beabstandet sind. Dadurch kann der Stromübergangswiderstand verringert werden, da die Kontaktzungen Unebenheiten gut ausgleichen können und elektrisch wie einzelne, parallel geschaltete Kontakte wirken. Vorteilhaft verbessern einzelne Kontaktzungen auch den elektrischen Kontakt, wenn die Förderbahn und damit der Energieversorgungsbus 15 bogenförmig verlaufen.

Vorteilhaft ist es, wenn - wie in Fig. 10 erkennbar - die freie Biegelänge des Kontakts 25 bzw. der Kontaktzungen etwa dem drei- bis vierfachem Durchmesser des genannten, flächenäquivalenten Kreises entspricht. Dadurch ergibt sich ein guter Kompromiss zwischen Strombelastbarkeit des Kontakts 26 und dessen Auflagekraft auf dem Stromleiter 20.

Die Fig. 11 zeigt wiederum den Energieversorgungsbus 15 schräg von hinten isoliert dargestellt, nun aber in Verbindung mit einer Anschlussbox 11. Nach dieser Ausführung ist die Antriebselektronik innerhalb der Anschlussbox 11 angeordnet und diese mit den Kontakten 27 elektrisch verbunden. Die elektrische Verbindung zur Antriebselektronik der Förderrollen 4 erfolgt hier mit Hilfe von federnd auf den Stromleitern 20 aufliegenden Kontakten 27 (z.B. wie in Fig. 11 durch Kontaktbügel). Besonders vorteilhaft ist es dabei, wenn - wie in der Fig. 11 dargestellt - mehrere (hier im Speziellen zwei) Kontakte 27 je Stromleiter 20 vorgesehen sind, die innerhalb der Anschlussbox 11 elektrisch verbunden sind. Beispielsweise können die Kontakte 27 aus einem einzigen Kupferstreifen gefertigt sein. Durch die Verwendung mehrerer in Längsrichtung der Stromleiter 20 hintereinander liegender Kontakte 27 gelingt die Kontaktierung auch dann noch, wenn in der Verlegung des Stromleiters 20 Unebenheiten auftreten oder der Energieversorgungsbus 15 bogenförmig verlegt wird, z.B. in einer Kurve der Förderbahn.

Die Figuren 12 und 13 zeigen die Anschlussbox 11 nun im Detail (die Fig. 12 im Schnitt, die Fig. 13 in Vorderansicht). Gut zu erkennen sind in der Fig. 12 insbesondere die federnd auf den Stromleitern 20 aufliegenden Kontakte 27. Für den oberen in der Fig. 12 dargestellten Kontakt 27 sind dabei zwei Stellungen dargestellt, einmal die unbelastete und einmal die bei Auflage auf dem Stromleiter 20 eingenommene Stellung.

Die in den Figuren 11 bis 13 dargestellten Kontakte 27 liegen linienförmig auf den Stromleitern 20 auf. Denkbar wäre natürlich auch, dass diese punktförmig oder flächig auf diesen aufliegen.

Die Fig. 14 zeigt nun einen Ausschnitt der bereits in den Figuren 1 bis 3 dargestellten Förderanlage 1, wobei die Führungsschiene 8 weggelassen wurde und zusätzlich der Datenbus 28 und die Verkabelung 29 zum Photodetektor 13 dargestellt ist.

Die Fig. 15 zeigt die Anordnung aus Fig. 14 nun teilweise in Explosionsdarstellung. Konkret ist ein Photodetektor 13 samt Verkabelung 29 und dem daran montierten Stecker 30 abgehoben dargestellt. Weiterhin ist auch ein Segment des Datenbusses 28 abgehoben dargestellt, sodass auch gut die an den Enden des Segments montierten Stecker 24 zu sehen sind. Die Stecker 24 und 30 können in den durch das Rahmenprofil 2 hindurch ragenden Teil der Grundplatte 21 der Anschlussbox 11 angeschlossen werden. Im Gegensatz zum Energieversorgungsbus 15, der mehrere Anschlussboxen 11 ungeschnitten elektrisch verbindet, ist der Datenbus 28 kettenförmig verlegt. Aus den Figuren 14 und 15 ist auch gut erkennbar, dass nicht an jeder Anschlussbox 11 ein Photodetektor 13 angeschlossen ist, sondern diese bedarfsweise entlang der Förderanlage 1 angeordnet sind.

Die Ausführungsbeispiele zeigen mögliche Ausführungsvarianten einer Förderanlage 1, wobei an dieser Stelle bemerkt sei, dass die Erfindung nicht auf die speziell dargestellten Ausführungsvarianten derselben bzw. desselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Insbesondere wird festgehalten, dass die Förderanlage 1 in der Realität auch mehr oder weniger Bestandteile als dargestellt umfassen kann.

Der Ordnung halber sei abschließend darauf hingewiesen, dass zum besseren Verständnis des Aufbaus der Förderanlage 1 dieses beziehungsweise dessen Bestandteile teilweise unmaßstäblich und/oder vergrößert und/oder verkleinert dargestellt wurden.

**Bezugszeichenaufstellung**

| | |
|---|---|
| 1 | Förderanlage |
| 2, 3 | Rahmenprofil |
| 4 | motorisierte Förderrolle |
| 5 | Riemen |
| 6, 7 | nicht motorisierte Förderrolle |
| 8, 9 | Führungsschiene |
| 10 | Montagebügel |
| 11 | Anschlussbox |
| 12 | Steuerung |
| 13 | Photodetektor |
| 14 | Reflektor |
| 15 | Energieversorgungsbus |
| 16 | Verbindungskabel |
| 17, 18 | Stecker Verbindungskabel |
| 19 | Isolator |
| 20 | Stromleiter |
| 21 | Grundplatte |
| 22 | Aufsteckteil |
| 23 | Endkappe |
| 24 | Stecker Datenbus |
| 25 | Kontakt Stecker Verbindungskabel |
| 26 | Leiterplatte mit elektronischer Schaltung |

27     Kontakt Anschlussbox
28     Datenbus
29     Verkabelung Photodetektor
30     Stecker Verkabelung Photodetektor

**Patentansprüche**

1. Förderanlage (1), umfassend

   - zwei voneinander beabstandet verlaufende Rahmenprofile (2, 3),
   - mehrere dazwischen angeordnete, motorisierte Förderrollen (4),
   - einen längs des zumindest einen Rahmenprofils (2) verlaufenden Isolator (19) und
   - mehrere in dem Isolator (19) angeordnete Stromleiter (20), welche mit einer Antriebselektronik der Förderrollen (4) elektrisch verbunden sind, wobei der Formfaktor f eines Stromleiters (20), welcher als Quotient des Umfangs eines zum Querschnitt des Stromleiters (20) flächenäquivalenten Kreises und des Umfangs des genannten Querschnitts des Stromleiters (20) definiert ist, im Bereich von f= 0,88 bis zu f=1,00 liegt, und
   - eine Anschlussbox (11), die getrennt von der Förderrolle (4) angeordnet ist,

   **dadurch gekennzeichnet, dass**
   der Isolator (19) mehrere längsseitig offene Aufnahmen umfasst und je ein Stromleiter (20) in je einer Aufnahme gelagert ist, und
   die Anschlussbox (11) mit Kontakten (27) ausgestattet ist, welche für die elektrische Verbindung zur Antriebselektronik der Förderrolle (4) federnd und punktförmig, linienförmig oder flächig auf den Stromleitern (20) aufliegen.

2. Förderanlage (1) nach Anspruch 1, **dadurch gekennzeichnet, dass** der Querschnitt eines Stromleiters (20) polygonförmig ist, insbesondere regelmäßig polygonförmig.

3. Förderanlage (1) nach Anspruch 1, **dadurch gekennzeichnet, dass** der Querschnitt eines Stromleiters (20) oval ist, insbesondere kreisförmig.

4. Förderanlage (1) nach Anspruch 1, **dadurch gekennzeichnet, dass** je Stromleiter (20) mehrere federnde und punktförmig, linienförmig oder flächig aufliegende Kontakte (27) vorgesehen sind.

5. Förderanlage (1) nach einem der Ansprüche 1 bis 4, **dadurch gekennzeichnet, dass** die elektrische Verbindung von mehreren Abschnitten von Stromleitern (20) mit Hilfe von federnden die Stromleiter (20) umgreifenden Kontakten (25) erfolgt.

6. Förderanlage (1) nach Anspruch 5, **dadurch gekennzeichnet, dass** die Kontakte (25) jeweils mehrere quer zum Stromleiter (20) verlaufende und in Längsrichtung desselben voneinander beabstandete Kontaktzungen aufweisen.

7. Förderanlage (1) nach Anspruch 1, **dadurch gekennzeichnet, dass** der längs des Rahmenprofils (2) verlaufende Isolator (19) mit den mehreren längsseitig offenen Aufnahmen und den Stromleitern (20) einen Energieversorgungsbus (15) bildet, und dass die Anschlussbox (11) eine Grundplatte (21) und einen Aufsteckteil (22) aufweist, wobei vorerst die Grundplatte (21) am Rahmenprofil (2) oder im Rahmenprofil (2) befestigt wird und danach der Energieversorgungsbus (15) montiert und durch Aufstecken des Aufsteckteils (22) kontaktiert wird.

**Claims**

1. A conveyor system (1), comprising

   - two frame profiles (2, 3) which run such that they are spaced apart from one another,
   - a plurality of motorized conveyor rollers (4) arranged in between,
   - an insulator (19) which runs along the at least one frame profile (2) and
   - a plurality of electric conductors (20) which are arranged in the insulator (19) and are electrically connected to drive electronics of the conveyor rollers (4), wherein the form factor f of an electric conductor (20), which is defined as a quotient of the circumference of a circle which is equivalent in area to the cross section of the electric conductor (20) and of the circumference of said cross section of the electric conductor (20), is in the range of from f= 0.88 to f=1.00, and
   - a connection box (11) which is disposed separately from the conveyor roller (4), **characterized in that**

   the insulator (19) comprises a plurality of receptacles which are open on the longitudinal side and one electric conductor (20) is mounted in each receptacle, and the connection box (11) is equipped with contacts (27) which lie on the electric conductors (20) in a spring-loaded and punctiform, linear or flat manner to establish an electrical connection to the drive electronics of the conveyor roller (4).

2. The conveyor system (1) according to claim 1, **characterized in that** the cross section of an electric conductor (20) is polygonal, in particular of a regular polygonal shape.

3. The conveyor system (1) according to claim 1, **char-**

**acterized in that** the cross section of an electric conductor (20) is oval, in particular circular.

4. The conveyor system (1) according to claim 1, **characterized in that** several spring-loaded and punctiform, linear or flat contacts (27) are provided for each electric conductor (20).

5. The conveyor system (1) according to one of claims 1 to 4, **characterized in that** the electrical connection of several sections of electric conductors (20) is established with the aid of spring-loaded contacts (25) extending around the electric conductors (20).

6. The conveyor system (1) according to claim 5, **characterized in that** the contacts (25) respectively comprise several contact blades extending transversely to the electric conductors (20) and spaced apart from one another in the longitudinal direction thereof.

7. The conveyor system (1) according to claim 1, **characterized in that** the insulator (19) running along the frame profile (2) having the plurality of receptacles which are open on the longitudinal side and the electric conductors (20) forms a power supply bus (15), and that the connection box (11) comprises a base plate (21) and a plug-on part (22), wherein the base plate (21) is first secured on the frame profile (2) or in the frame profile (2) and subsequently the power supply bus (15) is mounted and contacted by plugging on the plug-on part (22).

**Revendications**

1. Installation de convoyage (1) comprenant

   - deux profilés de cadres (2, 3) distants entre eux,
   - plusieurs rouleaux de convoyage (4) motorisés disposés entre eux,
   - un isolateur (19) s'étendant le long de l'au moins un profilé de cadre (2) et
   - plusieurs conducteurs de courant (20) disposés dans l'isolateur (19), qui sont reliés électriquement avec une électronique d'entraînement des rouleaux de convoyage (4), dans lequel le facteur de forme f d'un conducteur de courant (20), qui est défini comme le quotient entre la circonférence d'un cercle équivalent en surface à la section du conducteur de courant (20) et la circonférence de ladite section du conducteur de courant (20), est de l'ordre de f = 0,88 à f = 1,00, et
   - un boîtier de jonction (11) qui est disposé de manière séparée du rouleau de convoyage (4).

   **caractérisée en ce que**

l'isolateur (19) comprend plusieurs logements ouverts longitudinalement et un conducteur de courant (20) est logé dans chaque logement et le boîtier de jonction (11) est muni de contacts (27) qui sont posés, pour la liaison électrique avec l'électronique d'entraînement du rouleau de convoyage (4), de manière élastique et ponctuelle, linéaire ou à plat sur les conducteurs de courant (20).

2. Installation de convoyage (1) selon la revendication 1, **caractérisée en ce que** la section d'un conducteur de courant (20) est polygonale, plus particulièrement polygonale régulière.

3. Installation de convoyage (1) selon la revendication 1, **caractérisée en ce que** la section d'un conducteur de courant (20) est ovale, plus particulièrement circulaire.

4. Installation de convoyage (1) selon la revendication 1, **caractérisée en ce que**, pour chaque conducteur de courant (20), sont prévus plusieurs contacts (27) élastiques qui sont posés de manière ponctuelle, linéaire ou à plat.

5. Installation de convoyage (1) selon l'une des revendications 1 à 4, **caractérisée en ce que** la liaison électrique de plusieurs portions de conducteurs de courant (20) a lieu à l'aide de contacts (25) élastiques entourant les conducteurs de courant (20).

6. Installation de convoyage (1) selon la revendication 5, **caractérisée en ce que** les contacts (25) comprennent chacun plusieurs languettes de contact s'étendant transversalement par rapport au conducteur de courant (20) et distantes entre elles dans la direction longitudinale de ceux-ci.

7. Installation de convoyage (1) selon la revendication 1, **caractérisée en ce que** l'isolateur (19) s'étendant le long du profilé de cadre (2) constitue, avec les plusieurs logements ouverts longitudinalement et les conducteurs de courant (20), un bus d'alimentation électrique (15) et **en ce que** le boîtier de jonction (11) comprend une plaque de base (21) et une pièce enfichable (22), dans lequel la plaque de base (21) est d'abord fixée au profilé de cadre (2) ou dans le profilé de cadre (2) puis le bus d'alimentation électrique (15) est monté et mis en contact par emboîtement de la pièce enfichable (22).

Fig. 1

**Fig. 2**

**Fig. 3**

**Fig. 4**

**Fig. 5**

## Fig. 6

## Fig. 7

BB

2

26

11

21

24

20    25    16

18

22

Fig. 8

**Fig. 9**

**Fig. 10**

**Fig. 11**

**Fig. 12**

**Fig. 13**

**Fig. 14**

**Fig.15**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2012094690 A1
- DE 202004020677 U1
- EP 0300128 A1